# EUROPEAN PATENT APPLICATION

(11) **EP 2 570 244 A1**
(43) Date of publication of application: **20.03.2013**
(21) Application number: 11780550.7
(22) Date of filing: 02.05.2011
(51) Int. Cl.: B28B 11/02, B01D 39/20

(54) **MASK FOR SEALING HONEYCOMB STRUCTURE, AND SEALING METHOD FOR HONEYCOMB STRUCTURE USING SAME**

(30) Priority: 11.05.2010 JP 2010109358
(71) Applicant: Sumitomo Chemical Company, Limited, Tokyo 104-8260 (JP)
(72) Inventor: UOE Kousuke, Niihama-shi Ehime 792-0025 (JP); KOMORI Teruo, Niihama-shi Ehime 792-0804 (JP); MORI Masaharu, Mitoyo-shi Kagawa 769-1501 (JP); OHIRA Satoshi, Niihama-shi Ehime 792-0002 (JP)
(74) Representative: Vossius & Partner
(86) International application number: PCT/JP2011/060551
(87) International publication number: WO 2011/142293

(57) **Abstract**

The mask of the invention is used for plugging of the cells of a honeycomb structure, and it has a plurality of first through-holes running through a thickness direction of the mask, in a region that is to contact with an end face of the honeycomb structure when used. The first through-holes have an open area of 0.03 mm² or greater, and less than 90% of an open area of the cells to be plugged through the first through-holes.

## Description

### Technical Field

The present invention relates to a mask to be used for plugging a honeycomb structure, and to a plugging method for a honeycomb structure using the same.

### Background Art

Honeycomb filter structures for DPF (Diesel Particulate Filters) are widely known in the prior art. Such honeycomb filter structures have a structure wherein some of the cells of a cell structure comprising a plurality of through-holes, have one of their ends plugged with a plugging material, and the other ends of the remaining cells are likewise plugged with a plugging material.

A mask is used for plugging of the prescribed cells among the plurality of cells of the honeycomb structure. Two different types of masks are used for this purpose. One is a type with through-holes pre-formed at the locations corresponding to the cells to be plugged. The other type does not have pre-formed through-holes, the through-holes being formed after attachment to the end faces of the honeycomb structure, using a laser or the like, at locations corresponding to the cells that are to be plugged. The following Patent documents 1 and 2 describe methods for plugging honeycomb structures using masks.

### Citation List

### Patent Literature

[Patent document 1] Japanese Unexamined Patent Application Publication No. 2004-290766
[Patent document 2] Japanese Unexamined Patent Application Publication No. 2008-132749

### Summary of Invention

### Technical Problem

A mask of a type having pre-formed through-holes must be positioned with the honeycomb structure. Positioning of the mask through-holes and the cells to be plugged can be even more difficult, particularly when the honeycomb structure is a sintered body produced through a drying step or firing step, or a pre-firing green molded body, as in the case of DPFs, as contraction and deformation of the honeycomb structure occur during the production process. Some DPFs have narrow cell pitches (for example, about 1.1 to 2.8 mm), and even when the through-holes of the mask can be appropriately positioned for some sections of the end faces of the honeycomb structure, misalignments may occur at the other sections.

The present invention has been accomplished in light of this problem, and its object is to provide a mask that allows positioning of the end faces of a honeycomb structure to be easily performed and that is useful for reliably plugging prescribed cells, as well as a plugging method using the same.

### Solution to Problem

The mask of the invention is used for plugging of the cells of a honeycomb structure, and it has a plurality of first through-holes running through the thickness direction of the mask, in the region that is to be in contact with the end faces of the honeycomb structure when used. The first through-holes have an open area of 0.03 mm² or greater, and less than 90% of the open area of the cells to be plugged through the first through-holes.

Due to the open area of the first through-holes being less than 90% of the open area of the cells to be plugged, the mask will allow supply of the plugging material to the prescribed cells through the first through-holes even with slight misalignment between the positions of the first through-holes and the positions of the cell openings. In addition, by specifying that the open area for the first through-holes is 0.03 mm² or greater, the plugging material easily passes through the first through-holes and the prescribed amount of plugging material is easily supplied into the cells.

The mask of the invention may further have a plurality of second through-holes running through the thickness direction of the mask, at a section that is to contact with a peripheral edge portion of the end face of the honeycomb structure in the region that is to contact with the end face of the honeycomb structure when used. In this case, preferably the second through-holes are formed with a more narrow spacing than the cell pitch of the honeycomb structure, and the open area is 0.03 mm² or greater and less than 60% of the open area of the cells to be plugged by the first through-holes.

The peripheral edge portion of the honeycomb structure sometimes has cells with different cell shapes than the other sections, due to the presence of an outermost layer forming the sides of the honeycomb structure. For example, in the case of a honeycomb structure where the outermost layer shape is cylindrical and cells with a square cross-sectional shape are formed in the interior, there will be present cells that have a completely square cross-sectional shape, and partial cells at the peripheral edge portion.

The second through-holes are useful for total plugging of the partial cells and, if necessary, their adjacent cells. That is, by restricting the open area of the second through-holes to less than 60% of the open area of the cells (complete cells) to be plugged by the first through-holes, while arranging the second through-holes with a narrower spacing than the cell pitch of the honeycomb structure and sufficiently increasing their number, the plugging material can be appropriately supplied into the cells to be plugged through the second through-holes. In addition, by specifying that the open area for the second through-holes is 0.03 mm² or greater, the plugging material easily passes through the second through-holes and the prescribed amount of plugging material is easily supplied into the cells.

The present invention provides a method of plugging openings of prescribed cells of a honeycomb structure using the aforementioned mask. Specifically, the invention provides a plugging method for cells of a honeycomb structure, comprising:
(a) a step of positioning a mask on one end face of a honeycomb structure, and
(b) a step of supplying a plugging material through first through-holes of the mask into the openings of cells to be plugged on the one end face of the honeycomb structure,
wherein the mask has a plurality of first through-holes running through the thickness direction of the mask at in the region that is to contact with the one end face of the honeycomb structure, the open area of the first through-holes being 0.03 mm² or greater and less than 90% of the open area of the cells to be plugged through the first through-holes.

According to this plugging method, it is possible to easily accomplish positioning with the end face of the honeycomb structure, thus allowing more reliable plugging of prescribed cells than in the prior art.

When partial cells are present at the perimeter of the honeycomb structure, the plugging method may have the following construction. Specifically, the mask may further have a plurality of second through-holes running through the thickness direction of the mask at a section that is to contact with a peripheral edge portion of one end face of the honeycomb structure in the region that is to contact with the one end face of the honeycomb structure, the second through-holes being formed with a more narrow spacing than the cell pitch of the honeycomb structure, and the open area being 0.03 mm² or greater and less than 60% of the open area of the cells to be plugged through the first through-holes. Furthermore, in step (b), the plugging material is supplied through the second through-holes of the mask into the openings of the cells to be plugged at the peripheral edge portion of the end face of the honeycomb structure.

The plugging method may further comprise a step of plugging treatment of the other end face after the step of pluggng treatment of the one end face of the honeycomb structure. After plugging treatment of both end faces of the honeycomb structure, it may be subj ected to steps such as drying and firing as necessary, to obtain a honeycomb filter structure. That is, the plugging method may further comprise:
(c) a step of positioning another mask on the other end face of the honeycomb structure, and
(d) a step of supplying a plugging material through third through-holes of the other mask, into the openings of the cells to be plugged on the other end face of the honeycomb structure. In this case, the other mask preferably has a plurality of third through-holes running through the thickness direction of the mask in the region that is to contact with the other end face of the honeycomb structure, the open area of the third through-holes being 0.03 mm² or greater and less than 90% of the open area of the cells to be plugged through the third through-holes.

When partial cells are present at the peripheral edge portion of the honeycomb structure and partial cells are to be plugged on the other end face as well, the plugging method may have the following construction. Specifically, the other mask may further have a plurality of fourth through-holes running through the thickness direction of the mask at a section that is to contact with the peripheral edge portion of the other end face of the honeycomb structure in the region that is to contact with the other end face of the honeycomb structure, the fourth through-holes being formed with a more narrow spacing than the cell pitch of the honeycomb structure, and the open area being 0.03 mm² or greater and less than 60% of the open area of the cells to be plugged by the third through-holes, and in step (d) mentioned above, the plugging material is supplied through the fourth through-holes of the mask into the openings of the cells to be plugged at the peripheral edge portion of the end face of the honeycomb structure.

### Advantageous Effects of Invention

According to the invention it is possible to easily accomplish positioning with the end face of the honeycomb structure, thus allowing more reliable plugging of prescribed cells than in the prior art.

### Brief Description of Drawings

Fig. 1(a) is a perspective view showing one example of a honeycomb structure, and Fig. 1(b) is a partial magnified view of Fig. 1(a).
Fig. 2(a) is a perspective view showing one embodiment of a mask according to the invention, and Fig. 2(b) is a partial magnified view of Fig. 2(a).
Fig. 3 is a simplified cross-sectional view showing an example of a plugging apparatus.
Fig. 4 is a view along arrows IV-IV of the plugging apparatus of Fig. 3.
Fig. 5(a) is a perspective view showing another embodiment of a mask according to the invention, and Fig. 5(b) is a partial magnified view of Fig. 5(a).
Fig. 6(a) is a partial end view illustrating operation of the plugging apparatus of Fig. 3, and Fig. 6(b) is a partial cross-sectional view continuing from Fig. 6(a).
Fig. 7(a) is a partial cross-sectional view continuing from Fig. 6(b), and Fig. 7(b) is a partial cross-sectional view continuing from Fig. 7(a).
Fig. 8(a) is a partial cross-sectional view continuing from Fig. 7(b), and
Fig. 8(b) is a partial cross-sectional view continuing from Fig. 8(a).
Fig. 9(a) is a partial cross-sectional view continuing from Fig. 8(b), and
Fig. 9(b) is a partial cross-sectional view continuing from Fig. 9(a).

### Description of Embodiments

Preferred embodiments of the invention will now be explained in detail, with reference to the accompanying drawings. The honeycomb structure will be described first, before explanation of the mask of the invention.

### (Honeycomb structure)

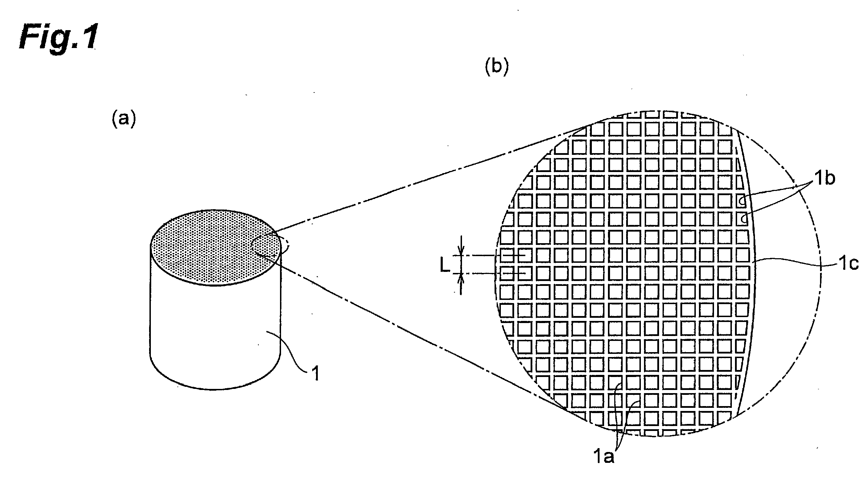

As shown in Fig. 1(a), the honeycomb structure 1 is a circular column having a plurality of cells 1a arranged in a substantially parallel manner. The cells 1a run through from one end face of the honeycomb structure 1 to the other end face. The cross-sectional shapes of the cells 1a are square, as shown in Fig. 1(b). As viewed from an end face, the plurality of cells 1a have a square arrangement in the honeycomb structure 1, i.e. the central axes of the cells 1a are arranged so that they are positioned at the apexes of squares. The sizes of the squares in the cross-sections of the cells 1a may be, for example, 0.8 to 2.5 mm on one side, and the open area may be about 0.6 to 7.0 mm² (more preferably about 0.8 to 6.0 mm²). The cell pitch of the honeycomb structure 1 may be 1.1 to 2.8 mm. The cell pitch is the distance between the centers of two adjacent cells, and for the honeycomb structure 1 it is the length L shown in Fig. 1(b).

The shape of the outermost layer 1c forming the side of the honeycomb structure 1 is cylindrical, and as mentioned above, it contains cells 1a with square cross-sectional shapes (hereunder referred to as "complete cells 1a" or simply "cells 1a"). In addition, the honeycomb structure 1 also has cells 1b on its perimeter whose cross-sectional shapes are not squares (hereunder referred to as " partial cells 1b" or simply "cells 1b"). As shown in Fig. 1(b), the shapes of the partial cells 1b are not consistent, and differ depending on their location.

There are no particular restrictions on the length of the through-holes composing the cells 1a, 1b of the honeycomb structure 1 in the direction of their extension, and it may be 40 to 350 mm, for example. There are also no particular restrictions on the outer diameter of the honeycomb structure 1, and it may be 100 to 320 mm, for example.

The material of the honeycomb structure 1 is not particularly restricted, but it is preferably a ceramic material from the viewpoint of high-temperature resistance. Examples of ceramic materials include oxides such as alumina, silica, mullite, cordierite, glass and aluminum titanate, and silicon carbide, silicon nitride, metals and the like. Aluminum titanate may further include magnesium and/or silicon. Such a honeycomb structure 1 is usually porous.

The honeycomb structure 1 may be a green molded body (a pre-firing molded body) that is converted to the ceramic material by subsequent firing. The green molded body includes an inorganic compound source powder as the ceramic starting material, an organic binder such as methyl cellulose, and additives that are added as necessary.

In the case of an aluminum titanate green molded body, for example, the inorganic compound source powder may include an aluminum source powder such as α-alumina powder, and a titanium source powder such as anatase or rutile titania powder, and if necessary also a magnesium source powder such as magnesia powder or magnesia spinel powder, and/or a silicon source powder such as silicon oxide powder or glass frit.

Organic binders include celluloses such as methyl cellulose, carboxylmethyl cellulose, hydroxyalkylmethyl cellulose and sodium carboxylmethyl cellulose; alcohols such as polyvinyl alcohol; and ligninsulfonic acid salts.

Examples of additives include pore-forming agents, lubricants, plasticizers, dispersing agents and solvents.

Pore-forming agents include carbon materials such as graphite; resins such as polyethylene, polypropylene and polymethyl methacrylate; plant materials such as starch, nut shells, walnut shells and corn; ice; and dry ice.

Lubricants and plasticizers include alcohols such as glycerin; higher fatty acids such as caprylic acid, lauric acid, palmitic acid, arachidic acid, oleic acid and stearic acid; stearic acid metal salts such as Al stearate; and polyoxyalkylenealkyl ethers (POAAE).

Examples of dispersing agents include inorganic acids such as nitric acid, hydrochloric acid and sulfuric acid; organic acids such as oxalic acid, citric acid, acetic acid, malic acid and lactic acid; alcohols such as methanol, ethanol and propanol; and surfactants such as ammonium polycarboxylate and polyoxyalkylenealkyl ethers.

Examples of solvents to be used include alcohols such as methanol, ethanol, butanol and propanol; glycols such as propylene glycol, polypropylene glycol and ethylene glycol; and water.

### (Mask for plugging of honeycomb structure)

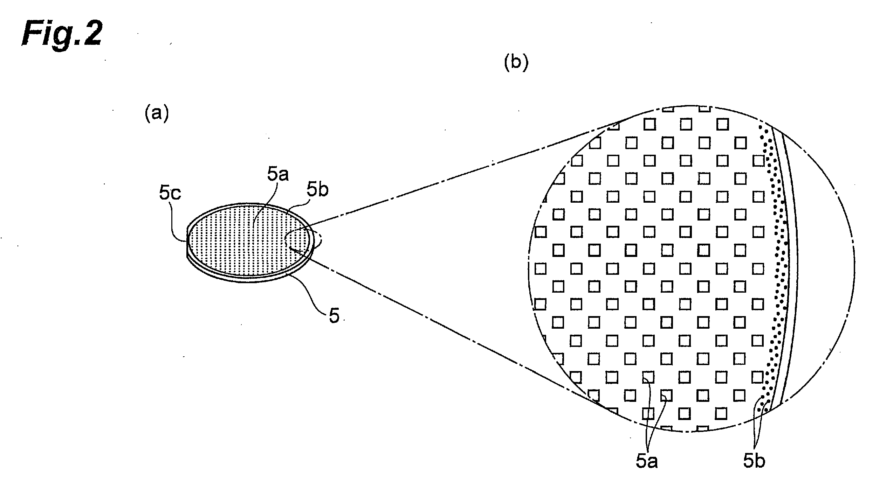

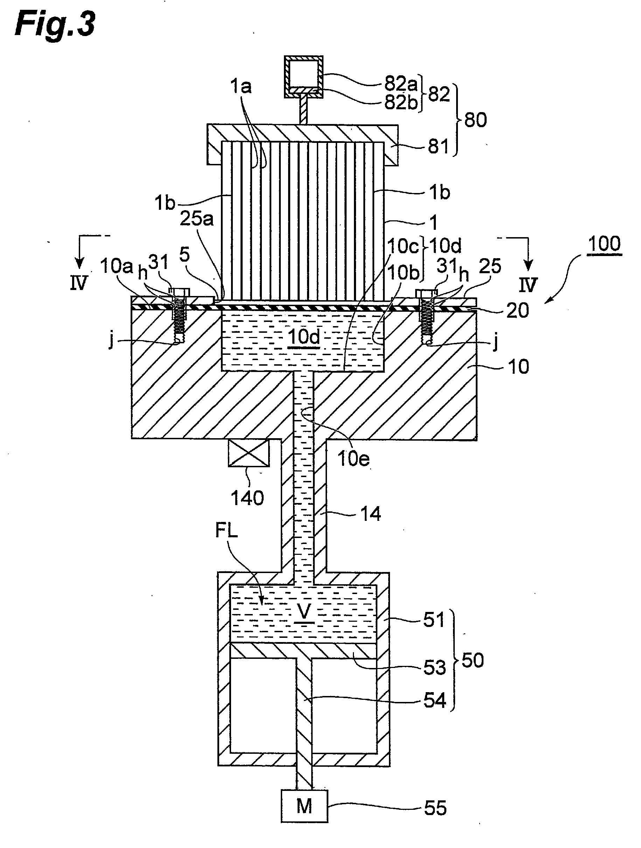

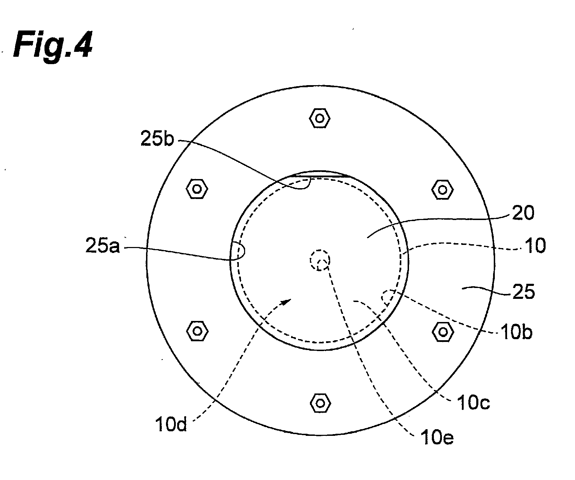

The mask 5 shown in Fig. 2 is used for plugging of prescribed cells of the honeycomb structure 1 shown in Fig. 1. The mask 5 is a circular disk-shaped member, having first through-holes 5a and second through-holes 5b running through the thickness direction. The material of the mask 5 is not particularly restricted, and may be a metal or resin, for example. In order to facilitate positioning of the through-holes 5a of the mask 5, an orientation flat 5c may be formed in the mask 5, and a protrusion 25b corresponding to the orientation flat 5c also provided in the ring member 25 of the plugging apparatus 100 shown in Fig. 3 (see Fig. 4). Also the outer diameter of the mask 5 is preferably larger than the inner diameter of the recess 10d of the body section 10 of the plugging apparatus 100.

The first through-holes 5a serve to supply plugging material to the complete cells 1a of the honeycomb structure 1. The first through-holes 5a are formed at a section that is in contact with the center section (the non- peripheral edge portion) of the end face of the honeycomb structure 1 during use of the mask 5.

The cross-sectional shapes of the first through-holes 5a are square, corresponding to the cells 1a of the honeycomb structure 1, as shown in Fig. 2(b). The first through-holes 5a are in a zigzag arrangement, each of the first through-holes 5a being disposed to correspond only to the plurality of cells 1a that are not mutually adjacent above, below and to the sides, among the plurality of cells 1a arranged in a square fashion in Fig. 1(b). The shapes of the first through-holes 5a are not limited to squares, but from the viewpoint of filling of the paste-like plugging material, they are preferably slightly smaller than the openings of the cells 1a, and with similar shapes.

The first through-holes 5a have an open area of 0.03 mm² or greater, and less than 90% of the open area of the cells to be plugged 1a by the first through-holes 5a. If the open area of the first through-holes 5a is less than 0.03 mm², the plugging material will pass through the first through-holes 5a with difficulty, and it will not be possible to supply the prescribed amount of plugging material into the cells 1a. The open area of the first through-holes 5a is preferably 0.05 mm² or greater, and more preferably 0.07 mm² or greater, and may be 0.2 mm² or greater.

On the other hand, if the open area of the first through-holes 5a is 90% or more of the open area of the cells 1a, the plugging material may be supplied to the neighboring cells 1a that are not to be plugged, with slight misalignments between the positions of the first through-holes 5a and the positions of the openings of the cells 1a. The open area of the first through-holes 5a is preferably less than 80% and more preferably less than 60% of the open area of the cells 1a.

The second through-holes 5b serve to supply plugging material to the partial cells 1b of the honeycomb structure 1. The second through-holes 5b are preferably formed at a section that is in contact with the peripheral edge portion of the end face of the honeycomb structure 1 during use of the mask 5, at a spacing that is narrower than the cell pitch (length L in Fig. 1) of the honeycomb structure 1. The spacing of the second through-holes 5b is preferably between L/10 and 3L/4 and more preferably between L/5 and L/2, from the viewpoint of reliably plugging all of the cells 1b.

The shapes of the second through-holes 5b may be shapes such that a plurality of through-holes can be formed in a limited region, regardless of the shapes of the partial cells 1b, and the shapes of the second through-holes 5b may be either circular or rectangular, and are preferably circular. As shown in Fig. 2(a), an annular band comprising a plurality of second through-holes 5b is formed in the mask 5.

The second through-holes 5b have an open area of 0.03 mm² or greater, and less than 60% of the open area of the cells to be plugged 1a by the first through-holes 5a. If the open area of the second through-holes 5b is less than 0.03 mm², the plugging material will pass through the second through-holes 5b with difficulty, and it will not be possible to supply the prescribed amount of plugging material into the cells 1b. The open area of the second through-holes 5b is preferably 0.04 mm² or greater, and more preferably 0.05 mm² or greater, and may be 0.2 mm² or greater.

On the other hand, if the open area of the second through-holey 5b is 60% or more of the open area of the complete cells 1a, the rigidity of the mask 5 will tend to be inadequate, and slight misalignment of the mask 5 may cause the plugging material to leak outside of the outermost layer 1c shown in Fig. 1(b), or cause the plugging material to be supplied to neighboring cells 1a that are not to be plugged. The open area of the second through-holes 5b is preferably no greater than 50% and more preferably no greater than 40% of the open area of the complete cells 1a.

When the open area of the through-holes 5a, 5b varies depending on the position in the thickness direction of the mask 5, the open area is the open area of the through-holes 5a, 5b at the surface of the mask 5 on the side that contacts the end face of the honeycomb structure 1.

With the mask 5, wherein the first through-holes 5a have smaller sizes than the openings of the cells 1a, it is possible to easily accomplish positioning with the end face of the honeycomb structure 1, and to allow more reliable plugging of prescribed cells 1a than in the prior art. Furthermore, by providing a plurality of second through-holes 5b in the mask 5, it is possible to more reliably plug partial cells 1b.

### (Plugging apparatus)

A preferred plugging apparatus for accomplishing plugging of the honeycomb structure 1 using the mask 5 will now be described. The plugging apparatus 100 shown in Fig. 3 comprises, mainly, a body section 10, an elastic sheet 20, a pump 50 and a holder 80.

The body section 10 is formed of a rigid material. The rigid material may be a metal such as stainless steel, or a polymer material such as a fiber-reinforced plastic. A recess 10d is formed on the top side 10a of the body section 10. For this embodiment, the shape of the recess 10d is cylindrical, as shown in Fig. 3 and Fig. 4. The side walls 10b of the recess 10d are perpendicular with respect to the top side 10a of the body section 10, and the base 10c is parallel. The diameter of the recess 10d may be 100 to 320 mm, for example. The depth of the recess 10d may be 0.2 to 20 mm, for example. A vibrator 140 such as an ultrasonic vibrator is preferably provided in the body section 10.

The elastic sheet 20 is disposed on the top side 10a of the body section 10 in a manner covering the open side of the recess 10d. The elastic sheet 20 is elastic and easily deformable. A rubber sheet is preferred as the elastic sheet 20. Rubber materials include natural rubber, and synthetic rubber materials such as styrene-butadiene rubber, butadiene rubber, butyl rubber, ethylene-propylene rubber, nitrile rubber, chloroprene rubber, fluoro rubber, silicone rubber and urethane rubber. The thickness of the elastic sheet 20 is not particularly restricted, and may be 0.3 to 3.0 mm, for example.

The elastic sheet 20 is anchored to the body section 10 by a ring member 25 and bolts 31. The ring member 25 has an opening 25a at a position corresponding to the recess 10d of the body section 10, and thus forms an annular shape. The ring member 25 is disposed on the elastic sheet 20 in such a manner that the center section of the elastic sheet 20 (the section facing the recess 10d) is exposed. The periphery of the elastic sheet 20 is thus sandwiched between the body section 10 and the ring member 25. Through-holes h are formed in the ring member 25 and the elastic sheet 20, screw holes j are formed in the body section 10 corresponding to these through-holes h, and bolts 31 are inserted through the through-holes h and are screwed into and anchored in the screw holes j, thereby bonding and anchoring the periphery of the elastic sheet 20 to the section around the recess 10d on the top side 10a of the body section 10.

As shown in Fig. 3 and Fig. 4, the inner diameter of the opening 25a of the ring member 25 is preferably larger than the inner diameter of the recess 10d of the body section 10.

The body section 10 also has a communicating channel 10e that opens into the base 10c of the recess 10d. Although the communicating channel 10e opens into the base 10c of the recess 10d in this embodiment, it is sufficient if it opens into an inner wall of the recess 10d, and it may instead open into, for example, the side wall 10b of the recess 10d. There are no particular restrictions on the shape or number of openings of the communicating channel 10e.

A pump 50 is connected to the communicating channel 10e via a connecting pipe 14.

The pump 50 comprises a cylinder 51, a piston 53 disposed inside the cylinder 51, and a piston rod 54 connected to the piston 53. A motor 55 that moves the piston rod 54 in a reciprocal manner in the axial direction is connected to the piston rod 54. The piston rod 54 may also be moved manually.

For this embodiment, a closed space V is formed between the elastic sheet 20 and the piston 53 by the body section 10, connecting pipe 14 and cylinder 51, and a fluid FL is filled into the closed space V The fluid FL is not particularly restricted and may be a gas such as air, but it is preferably a liquid, and most preferably spindle oil or the like. By moving the piston 53 it is possible to discharge the fluid FL from inside the recess 10d of the body section 10, and to supply the fluid FL into the recess 10d.

A holder 80 is provided on the body section 10. The holder 80 has a holding fixture 81 that holds the honeycomb structure 1, and a pneumatic cylinder 82 to which the holding fixture 81 is connected.

The holding fixture 81 holds the honeycomb structure 1 with one end face facing the elastic sheet 20 and recess 10d, as shown in Fig. 3.

The pneumatic cylinder 82 has a cylinder 82a extending in the vertical direction and a piston 82b provided inside the cylinder 82a, and externally supplied pressure is adjusted to allow adjustment of the pressure both above and below the piston 82b. The pneumatic cylinder 82 thus allows movement of the holding fixture 81 in the direction in which it approaches the honeycomb structure 1 and the elastic sheet 20, and the direction in which they mutually separate. Also, the pneumatic cylinder 82 presses the holding fixture 81 downward with a prescribed force corresponding to the supply pressure of gas before and after the piston 82b, to allow the honeycomb structure 1 to be firmly contacted to the mask 5. In addition, the pneumatic cylinder 82 releases the pressure before and after the piston to allow free movement of the holding fixture 81 in the vertical direction. That is, the holder 80 is switchable between a state in which the honeycomb structure 1 held by the holding fixture 81 is freely movable in the upward direction, and a state in which the honeycomb structure 1 is held fixed with respect to the body section 10.

### (Plugging method for honeycomb structure)

The plugging method according to this embodiment is employed to plug the openings of prescribed cells of the honeycomb structure 1 using the mask 5. More specifically, the plugging method comprises the following steps.
(a) A step of positioning the mask 5 on one end face of the honeycomb structure 1; and
(b) a step of supplying a plugging material through first through-holes 5a of the mask 5, into the openings of the cells to be plugged on the one end face of the honeycomb structure 1.

According to this plugging method, it is possible to easily accomplish positioning with the end face of the honeycomb structure 5, thus allowing more reliable plugging of prescribed cells than in the prior art.

The honeycomb structure 1 includes partial cells 1b on its peripheral edge portion, as shown in Fig. 1(b). Thus, during step (b), the plugging material is supplied through the second through-holes 5b of the mask 5 into the openings of the partial cells 1b.

To produce the honeycomb filter structure, one end face of the honeycomb structure 1 is subjected to plugging treatment, and then the other end face is subjected to plugging treatment in the same manner. That is, after step (b), the following steps are carried out in order:
(c) a step of positioning another mask 5' on the other end face of the honeycomb structure 1; and
(d) a step of supplying a plugging material through third through-holes 5a' of the mask 5', into the openings of the cells to be plugged on the other end face of the honeycomb structure 1.

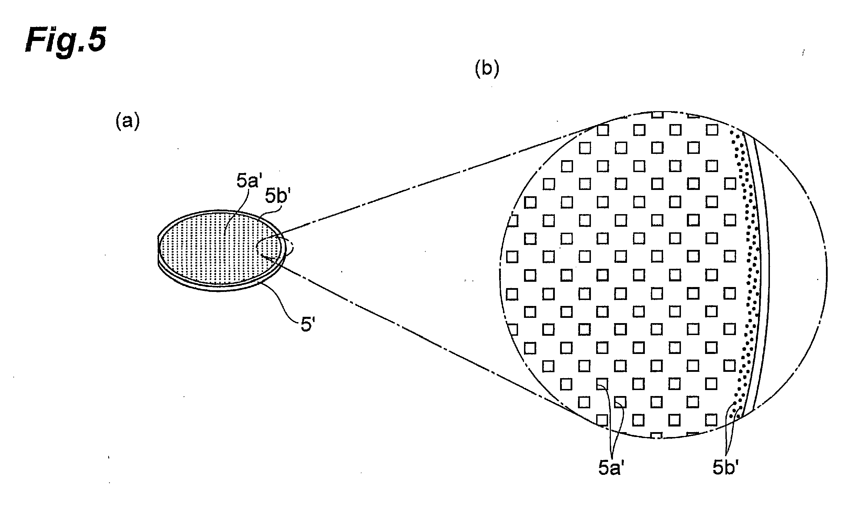

As shown in Fig. 5, the mask 5' has third and fourth through-holes 5a', 5b' corresponding respectively to the first and second through-holes 5a, 5b of the mask 5. The mask 5' has the same construction as the mask 5, except that the arrangement of the through-holes 5a' is in a zigzag pattern exactly opposite to the arrangement of the through-holes 5a of the mask 5. For plugging of the partial cells 1b on the other end face of the honeycomb structure 1, the plugging material is supplied through the fourth through-holes 5b' of the mask 5' into the openings of the partial cells 1b, in step (d).

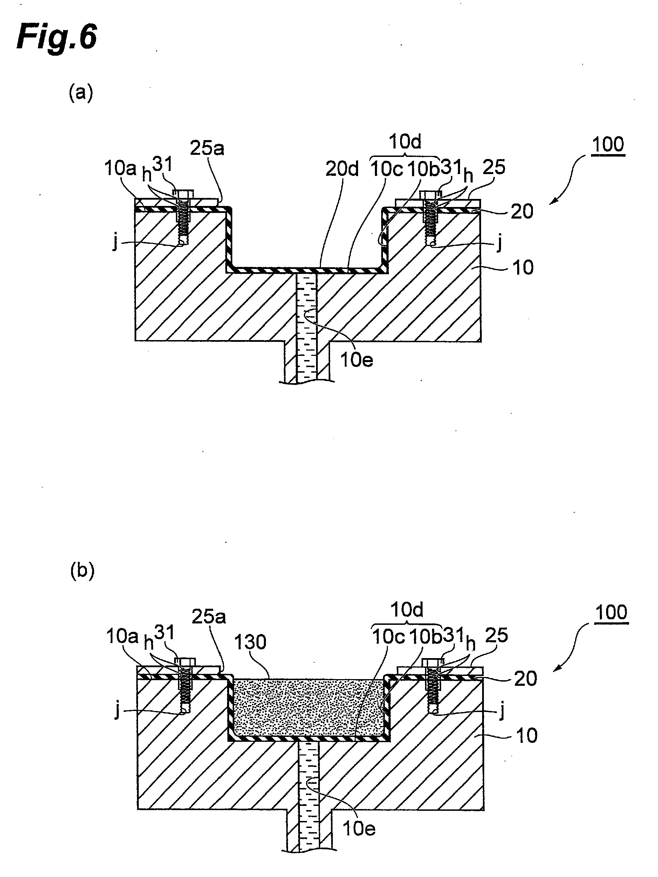

A method for plugging the honeycomb structure 1 using the plugging apparatus 100 and mask 5 will now be described. First, the pneumatic cylinder 82 is pre-driven from the state illustrated in Fig. 3, being pulled upward from the holding fixture 81 holding the honeycomb structure 1, while the mask 5 is removed from the top of the elastic sheet 20. Next, the piston 53 of the pump 50 is pulled downward to discharge fluid FL downward from the recess 10d of the body section 10. This deforms the elastic sheet 20, as shown in Fig. 6(a), to closely contact the side wall 10b and base 10c of the recess 10d, thereby forming a recess 20d in the elastic sheet 20.

Next, as shown in Fig. 6(b), the plugging material 130 is supplied into the recess 20d of the elastic sheet 20. If necessary, the vibrator 140 is operated to promote flattening and degassing of the surface of the plugging material 130.

The plugging material 130 is not particularly restricted so long as it can close the ends of the cells 1a, 1b of the honeycomb structure 1, but it is preferably a liquid. An example of a plugging material is a slurry comprising a ceramic material or ceramic starting material, and a binder, lubricant, pore-forming agent and solvent.

The ceramic material may be the constituent material of the honeycomb structure, or its starting material. The amount of ceramic material used may be, for example, 50 to 85 parts by weight with respect to 100 parts by weight of the slurry.

Binders may be organic binders, including celluloses such as methyl cellulose, carboxylmethyl cellulose, hydroxyalkylmethyl cellulose and sodium carboxylmethyl cellulose; alcohols such as polyvinyl alcohol; and ligninsulfonic acid salts. The amount of binder used may be, for example, 0 to 30 parts by weight with respect to 100 parts by weight of the slurry.

Lubricants include alcohols such as glycerin; higher fatty acids such as caprylic acid, lauric acid, palmitic acid, arachidic acid, oleic acid and stearic acid; and stearic acid metal salts such as aluminum stearate. The amount of lubricant used may be, for example, 0.5 to 20 parts by weight with respect to 100 parts by weight of the slurry.

Pore-forming agents include carbon materials such as graphite; resins such as polyethylene, polypropylene and polymethyl methacrylate; plant materials such as starch, nut shells, walnut shells and corn; ice; and dry ice. The amount of pore-forming agent used may be, for example, 0 to 20 parts by weight with respect to 100 parts by weight of the slurry.

Examples of solvents to be used include alcohols such as methanol, ethanol, butanol and propanol; glycols such as propylene glycol, polypropylene glycol and ethylene glycol; and water. Water is preferred among these, and more preferably ion-exchanged water is used for a low impurity content. The amount of solvent used may be, for example, 10 to 40 parts by weight with respect to 100 parts by weight of the slurry.

The amount of plugging material to be used for plugging of the one end face of the honeycomb structure 1 may be, for example, 3 to 5000 mL.

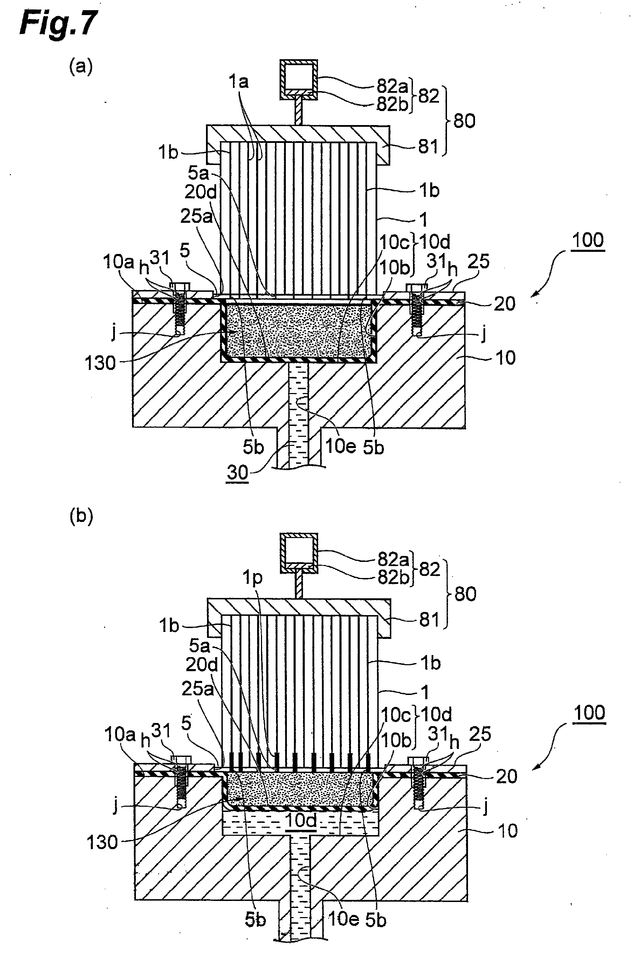

Next, as shown in Fig. 7(a), the mask 5 is set on the elastic sheet 20 so as to cover the recess 10d of the body section 10, and then the holding fixture 81 is moved downward by the pneumatic cylinder 82 to contact the honeycomb structure 1 with the mask 5. This creates communication between some of the cells 1a of the honeycomb structure 1 and the first through-holes 5a of the mask 5, while also creating communication between all of the partial cells 1b of the honeycomb structure 1 and the second through-holes 5b of the mask 5. In addition, the holding fixture 81 is pressed downward by the pneumatic cylinder 82 anchoring the honeycomb structure 1 to the mask 5 and body section 10 (step (a)). Alternatively, the mask 5 may be placed beforehand on the end face of the honeycomb structure 1 so that the positions of the first through-holes 5a match the cells 1a into which the plugging material is to be introduced, and then mounted on the plugging apparatus 100.

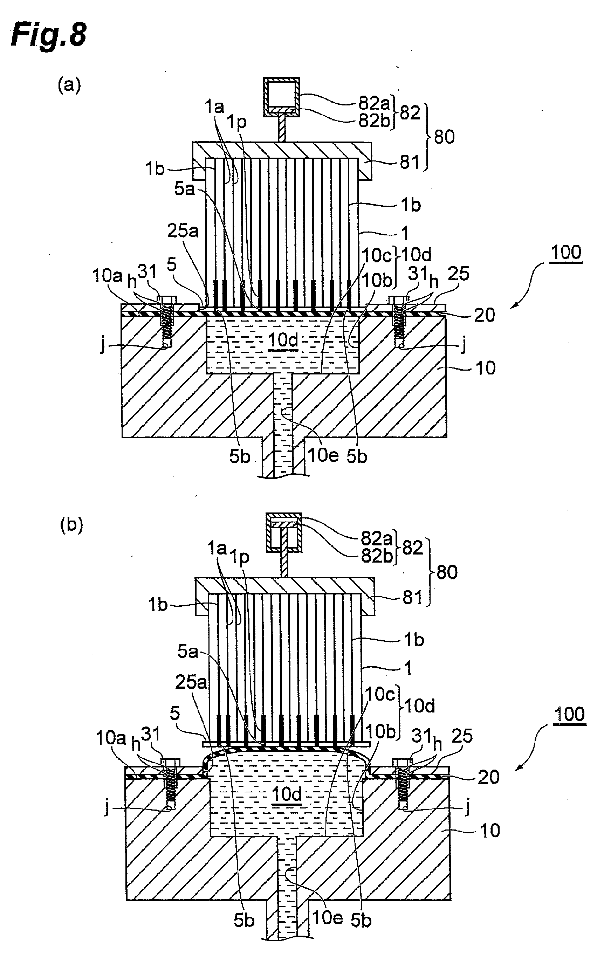

Next, the piston of the pump 50 is moved upward to supply fluid FL into the recess 10d, thereby causing the elastic sheet 20 to move toward the mask 5, as shown in Fig. 7(b). This step is carried out until the elastic sheet 20 contacts the mask 5 and deformation of the elastic sheet 20 is eliminated, as shown in Fig. 8(a).

This causes the plugging material 130 to be supplied to some of the cells 1a and all of the cells 1b of the honeycomb structure 1, through the through-holes 5a, 5b of the mask 5, so that plugged sections 1p are formed (step (b)).

Next, pressure in the downward direction of the honeycomb structure 1 by the pneumatic cylinder 82 is halted to allow free movement of the honeycomb structure 1 in the upward direction, and then the piston 53 is further raised to supply more fluid FL between the elastic sheet 20 and the body section 10. This causes the elastic sheet 20 to be deformed in a convex manner in the upward direction, moving the mask 5 and honeycomb structure 1 upward, as shown in Fig. 8(b). At this time, the periphery of the elastic sheet 20 that is deformed in a convex manner separates from the mask 5, thereby allowing the mask 5 and the honeycomb structure 1 to be easily separated from the body section 10.

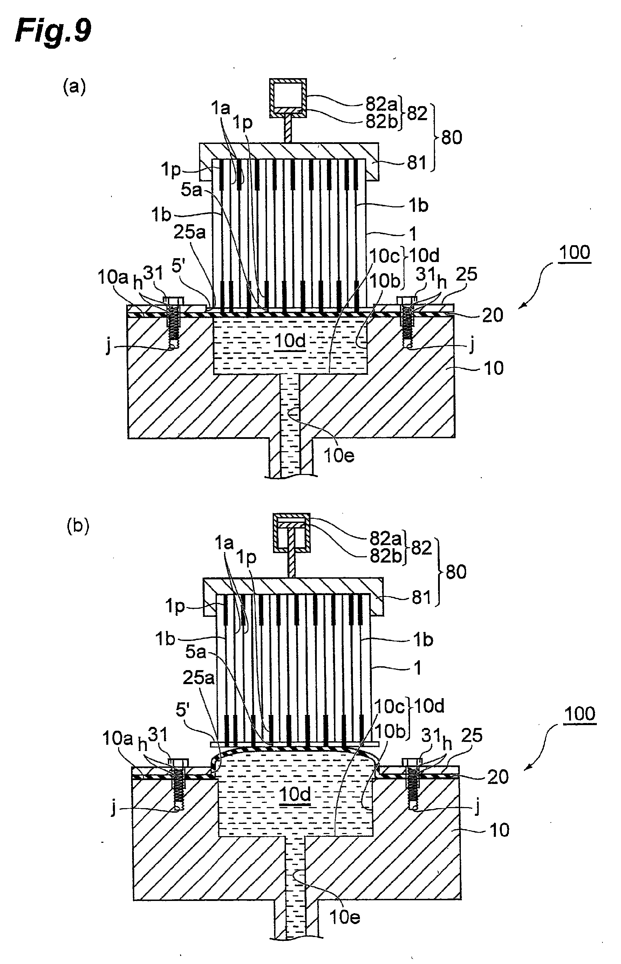

Next, after the honeycomb structure 1 has been removed from the holding fixture 81, it is vertically inverted, and then the honeycomb structure 1 is again held in the holding fixture 81. The mask 5', having a zigzag pattern exactly opposite to the arrangement of the first through-holes 5a in the mask 5, is used for a similar procedure (steps (c) and (d)). This plugs the other end side of the remaining cells 1a and all of the partial cells 1b with the plugging material, forming plugged sections 1p, as shown in Fig. 9(a). Next, the elastic sheet 20 is deformed upward in a convex manner, as described above, to allow the mask 5' and honeycomb structure 1 to be easily separated from the body section 10 and the elastic sheet 20.

The honeycomb structure 1 that has been subjected to plugging treatment on both ends in this manner may be dried and fired to produce a honeycomb filter structure.

The plugging method using the mask 5 and mask 5' allows more reliable plugging of only the cells to be plugged 1a, among the plurality of complete cells 1a, while also allowing more reliable plugging of all of the partial cells 1b. Furthermore, since the elastic sheet can be deformed in a convex manner in the plugging apparatus 100, as illustrated in Fig. 8(b) and Fig. 9(b), the mask 5 contacting the honeycomb structure 1 after the plugging material 130 has been supplied can be easily separated from the body section 10 and elastic sheet 20. Consequently, production efficiency can be increased and a plugged honeycomb structure can be produced at low cost.

The above detailed explanation of the preferred embodiment of the invention is not intended to restrict the scope of the invention to this embodiment. For example, while a mask 5 with first through-holes 5a and second through-holes 5b is used as an example in the aforementioned embodiment, for cases where the honeycomb structure does not include partial cells 1b or cases where a mask is not necessary to plug the cells 1b, it is possible to use a mask that has first through-holes 5a but no second through-holes 5b.

The shape and structure of the honeycomb structure 1 are also not limited to those described above. For example, the outer shape of the honeycomb structure 1 need not be circular columnar, and may instead be rectangular columnar, such as square columnar, or elliptic cylindrical, for example. Also, so long as the open area of the cells is about 0.6 to 7.0 mm² (more preferably about 0.8 to 6.0 mm²), the cross-sectional shapes of the cells are not limited to squares, and may instead be, for example, substantially triangular, substantially quadrilateral, substantially hexagonal, substantially octagonal, substantially circular, or combinations of these. Furthermore, the arrangement of the cells does not need to be a square arrangement of the cells 1a, and may instead be a triangular arrangement or hexagonal arrangement, for example.

### Reference Signs List

1: Honeycomb structure, 1a: complete cell, 1b: partial cell, 5,5': masks, 5a: first through-hole, 5b: second through-hole, 5a': third through-hole, 5b': fourth through-hole.

## Claims

1. A mask to be used for plugging of cells of a honeycomb structure,
the mask having a plurality of first through-holes running through a thickness direction of the mask in a region that is to contact with an end face of the honeycomb structure when used,
an open area of the first through-holes being 0.03 mm² or greater and less than 90% of an open area of the cells to be plugged through the first through-holes.

2. The mask according to claim 1, further having a plurality of second through-holes running through the thickness direction of the mask at a section that is to contact with a peripheral edge portion of the end face of the honeycomb structure in the region that is to contact with the end face of the honeycomb structure during its use,
the second through-holes being formed with a more narrow spacing than a cell pitch of the honeycomb structure, and an open area being 0.03 mm² or greater and less than 60% of the open area of the cells to be plugged through the first through-holes.

3. The mask according to claim 1 or 2, wherein the open area of the first through-holes is 0.2 mm² or greater.

4. The mask according to any one of claims 1 to 3, wherein the open area of the second through-holes is 0.2 mm² or greater.

5. A plugging method for cells of a honeycomb structure, comprising:
(a) a step of positioning a mask on one end face of a honeycomb structure, and
(b) a step of supplying a plugging material through first through-holes of the mask into openings of cells to be plugged on the one end face of the honeycomb structure,
wherein the mask has a plurality of first through-holes running through a thickness direction of the mask at a region that is to contact with the one end face of the honeycomb structure,
an open area of the first through-holes being 0.03 mm² or greater and less than 90% of an open area of the cells to be plugged through the first through-holes.

6. The plugging method according to claim 5, wherein the mask further has a plurality of second through-holes running through the thickness direction of the mask at a section that is to contact with a peripheral edge portion of the one end face of the honeycomb structure in the region that is to contact with the end face of the honeycomb structure,
the second through-holes being formed with a more narrow spacing than a cell pitch of the honeycomb structure, and an open area being 0.03 mm² or greater and less than 60% of the open area of the cells to be plugged through the first through-holes, and
in step (b), the plugging material is supplied through the second through-holes of the mask into the openings of the cells to be plugged at the peripheral edge portion of the end face of the honeycomb structure.

7. The plugging method according to claim 5 or 6, further comprising:
(c) a step of positioning another mask on the other end face of the honeycomb structure, and
(d) a step of supplying a plugging material through third through-holes of the other mask into openings of cells to be plugged on the other end face of the honeycomb structure,
wherein the other mask has a plurality of third through-holes running through the thickness direction of the mask at a region that is to contact with the other end face of the honeycomb structure,
an open area of the third through-holes being 0.03 mm² or greater and less than 90% of an open area of the cells to be plugged through the third through-holes.

8. The plugging method according to claim 7, wherein the other mask further has a plurality of fourth through-holes running through the thickness direction of the mask at a section that is to contact with a peripheral edge portion of the other end face of the honeycomb structure in the region that is to contact with the end face of the honeycomb structure,
the fourth through-holes being formed with a more narrow spacing than the cell pitch of the honeycomb structure, and an open area being 0.03 mm² or greater and less than 60% of the open area of the cells to be plugged through the third through-holes, and
in step (d), the plugging material is supplied through the fourth through-holes of the mask into the openings of the cells to be plugged at the peripheral edge portion of the end face of the honeycomb structure.
